Europäisches Patentamt

(19) European Patent Office

Office européen des brevets

(11) Publication number: **0 194 371**
A1

(12) **EUROPEAN PATENT APPLICATION**

(21) Application number: 85302127.7

(22) Date of filing: 27.03.85

(51) Int. Cl.⁴: **C 04 B 28/34**
**C 04 B 22/16**

(30) Priority: 12.03.85 JP 48933/85

(43) Date of publication of application:
17.09.86 Bulletin 86/38

(84) Designated Contracting States:
DE FR GB

(71) Applicant: Chichibu Cement Co. Ltd.
c/o Nippon Kogyo Club Bldg. 4-6 Marunouchi 1-chome
Chiyoda-ku(JP)

(72) Inventor: Minegishi, Keiichi
1100-168 Ooaza Kamino
Kumagaya-shi Saitama-ken(JP)

(72) Inventor: Okamoto, Toyoshige
2-1 Taukimi-cho
Kumagaya-shi Saitama-ken(JP)

(72) Inventor: Abe, Motoshi
1311 Ooaza Ishihara
Kumagaya-shi Saitama-ken(JP)

(74) Representative: Wolff, Francis Paul
F.P. Wolff & Company 58 Kings Road
Reading RG8 7ST(GB)

(54) Curing agents for water glass.

(57) Phosphate glass powder is a curing agent for alkaline binders such as water glass or silica sol. The phosphate glass powder may be pre-treated with a substance such as calcium hydroxide that is capable of reacting in solution with a phosphoric acid ion to form an insoluble or scarcely soluble salt, to decrease the reactivity of the powder with the water glass and permit improved control of the pot life of the mixture. The cured compositions have good bonding strength and water resistance.

# CURING AGENTS FOR WATER GLASS

## Field of the Invention

The present invention relates to a curing agent for solutions of sodium silicate, potassium silicate, etc. or so-called water glass.

## Background of the Invention

Water glass can be produced with relative ease, is inexpensive and free from any toxicity, and has been widely used as a binder for adhesives, paints, and the like. However, water glass has the disadvantage that, when it is cured as such by air drying the cured mass is poor in water resistance, since the constituent alkali silicate, per se, is a water-soluble material. For that reason, various curing agents such as silicofluorides, condensed aluminum phosphate, acetates and the like are usually employed to improve the water resistance of cured masses. However, none of these agents gives satisfactory results.

For instance, when the well-known silicofluorides are used as curing agents, it is possible to introduce certain improvements in water resistance, but difficulty is involved in the regulation of the period of time from mixing with water glass to curing, that is, the pot life. There is also another disadvantage that harmful substances such as sodium fluoride are formed in the cured masses. With respect to condensed aluminum phosphate, which is known to show relatively favorable physical properties such as water resistance, pot life, etc., this substance also has the disadvantage that its production requires special procedures which are troublesome and do not easily give any inexpensive products. Thus, the prior art curing agents have both merits and demerits, and there is still a need for an effective and advantageous curing agent for water glass materials.

## Summary of the Invention

As a result of studies made to solve the foregoing problems, it has been found that phosphate glass powder shows favorable physical properties as a curing agent for water glass. It has also been found that a curing agent for water glass capable of easily regulating the curing time, viz., the pot life of water glass, is obtained by treating such phosphate glass powder with a solution of a substance capable of reacting with a phosphoric acid ion to form an insoluble or scarcely soluble salt, for instance, an aqueous solution of calcium hydroxide.

## Preferred embodiment of the Invention

The term "phosphate glass" used herein refers to glasses containing $P_2O_5$ as the glass-forming oxide. In phosphate glass, phosphoric acid actually constitutes network units in the form of a $(PO_4)^{-3}$ ion tetrahedron wherein, out of four oxygen atoms surrounding a P atom, only one oxygen atom is generally taken as being present as a non-crosslinked oxygen atom. For that reason, phosphate glass is generally of a network structure that is more open than silicate glass. This is the reason why only a certain type of phosphate glass is known to be used in a special field. In accordance with the present invention, however, it has been found as a result of various investigations that the phosphate glass can provide a favorable curing agent for water glass, that is an alkaline solution, by making use of the properties that it is poor in chemical durability, and more easily suffers erosion in an alkaline solution.

As the phosphate glasses capable of being used as the curing agents for water glass in the present invention, use is effectively made of those having various compositions. Although no special limitation is imposed upon these compositions, it is generally preferred that the curing agent of the cold curing type contain no less than about 50 % by weight

of $P_2O_5$. When the content of $P_2O_5$ is lower, the resulting composition generally needs a prolonged period of time for curing, depending upon the amount of the curing agent used. In some cases, it is thus required to heat such curing agents to some extent to achieve curing within a short time. In any case, the phosphate glasses yield curing agents having a variety of curing ability, which may be used according to the desired purpose. While phosphate glass powder can provide a curing agent for water glass, it is more preferable that, in order to obtain cured masses having improved physical properties, in particular more improved water resistance that has been desired in the prior art, the phosphate glasses contain substances for decreasing the solubility of silica gel resulting therefrom, for instance, $Al_2O_3$, $CaO$, etc.

The phosphate glass compositions which can be produced with relative ease from such a point of view embrace a great number of systems including, for instance, two-component systems represented in terms of $Al_2O_3-P_2O_5$ and three-component systems represented in terms of $CaO-Al_2O_3-P_2O_5$ and $ZnO-Al_2O_3-P_2O_5$. In the following, the curing agents of the present invention will be mainly explained with reference to the $Al_2O_3-P_2O_5$ and $CaO-Al_2O_3-P_2O_5$ systems.

These phosphate glass systems are essentially comprised of $Al_2O_3$ and $P_2O_5$, and are of the network structure of an oxygen tetrahedron including a -O-P-O-Al-O- bond. Referring to, e.g., the $CaO-Al_2O_3-P_2O_5$ system, a part of such a network structure is considered to be cut off by a modification oxide such as CaO. The $P_2O_5$ source of such phosphate glasses includes, for instance, phosphoric acid, ammonium phosphate, etc., the $Al_2O_3$ source includes alumina, aluminum hydroxide, etc., and the CaO source includes calcium hydroxide, calcium carbonate, etc. Alternatively, such glasses may be obtained by suitable mixing of aluminum phosphate, a compound of $P_2O_5$ with $Al_2O_3$, calcium phosphate, a compound of $P_2O_5$ with CaO, and the like, followed by melting at high temperatures and quenching. For instance, it has been found that the $CaO-Al_2O_3-P_2O_5$ system has a variety of compositions requiring a temperature of as low as 1000°C to a temperature of as high as 1500°C for vitrification. The resulting glasses can be used as the curing agents for water glass according to the present invention. When such phosphate glasses are used as the curing agents for water glass, they are pulverized to a suitable particle size of generally no higher than about 88 microns. With the same sample, the finer the particle size, the higher the reactivity with respect to water glass, resulting in curtailment of pot life after mixing with water glass.

According to one aspect of the present invention, the thus prepared phosphate glass powder yields a satisfactory curing agent for water glass, and the resulting cured mass shows satisfactory physical properties represented in terms of water resistance, etc.

On the other hand, when the phosphate glass powder according to the present invention is used as a curing agent for water glass without making any modification thereto, there arises no substantial problem in connection with the water resistance, etc. of the resultant cured mass. However, it is true that considerable difficulty is frequently encountered in the regulation of pot life, since it becomes too short or long, depending upon the difference in the composition of the glass.

According to another aspect of the present invention, it has been found that the pot life can be relatively easily controlled between several minutes and several hours or longer by allowing the phosophate glass powder having a short pot life to mix and react with a solution of a substance capable of reacting with a phosphoric acid ion to form an insoluble or scarcely soluble salt, such as a solution of calcium hydroxide in varied concentrations.

Substances forming such an insoluble or scarcely soluble salt include magnesium hydroxide, barium hydroxide, etc. in addition to calcium hydroxide. Usually, satisfactory results are obtained with calcium hydroxide, which is inexpensive.

Although not clarified, the cause for extension of the pot life due to such treatment may be considered to result from the fact that, for example, $P_2O_5$ in the vicinity of the surfaces of the phosphate particles reacts with calcium hydroxide to form an insoluble or scarcely soluble calcium phosphate on those surfaces which, in turn, hinders the reactivity with water glass. In any case, that treatment makes it possible to control the pot life between several minutes and several hours or longer without having any substantially adverse influence upon the physical properties, etc. of the cured mass, thus providing a favorable curing agent for water glass.

Varying with the composition of the curing agent and the type of water glass, the amount of the curing agent used in the present invention is usually in a range of about 10 to 200 parts by weight per 100 parts by weight of water glass. For instance, in the case of No. JIS3 water glass, a cured mass having improved water resistance is obtained with the use of an amount of about 20 to 120 parts by weight.

When mixing with water glass, the curing agent of the invention consisting of the phosphate glass powder is generally cured at normal (room) temperature, that is, it shows a self-curing property, depending upon its composition. If the mixing ratio of the curing agent and water glass is appropriate, then the resulting cured mass shows improved water resistance without the application of any particular high-temperature treatment. However, the application of a high-temperature treatment may be desired when the amount of the curing agent used is small with the result that the content of $P_2O_5$ is so small that the reaction of the curing agent with water glass is considerably delayed at normal temperature, or a further increase in water resistance, etc. is required.

No particular limitation is imposed upon the water glass used in the present invention, and any commercially available products such as soda silicate, potassium silicate or lithium silicate can be used. The curing agent of the present invention is effectively applicable to not only water glass but also alkaline binders similar thereto, for instance, silica sol.

In the following, the curing agents according to the present invention will be explained in further detail with reference to the following examples, which are given for the purpose of illustration only.

## EXAMPLES

A) Preparation of Curing Agents

1. After 6 parts by weight of aluminum hydroxide are mixed with 100 parts by weight of aluminum primary phosphate ($Al(H_2PO_4)_3$), the mixture is filled in an alumina crucible, followed by closing of a lid of alumina. The crucible is then heated to 1450°C over about 1.5 hours, and is maintained at that temperature for 30 minutes. Thereafter, the contents are poured into water for quenching to obtain phosphate glass consisting of about 24 % by weight of $Al_2O_3$ and about 76 % by weight of $P_2O_5$. After drying, the thus obtained glass is pulverized to no more than 88 microns to obtain a phosphate glass curing agent (Sample No. 1).

2. After 0.25 gram of calcium hydroxide has been mixed with 100 grams of the curing agent powder obtained in (1), the mixture is charged into a beaker with the addition of about 1 liter of water. While heating and maintaining the beaker at a temperature of about 90°C, mixing and stirring are effected until the pH of the liquid decreases to no higher than about 8. Thereafter, filtration and drying yield a surface-treated phosphate glass curing agent (Sample No. 2).

3. After 0.5 gram of calcium hydroxide has been mixed with 100 grams of the powder obtained in (1), the mixture is charged into a beaker with the addition of about 1 liter of water. The procedures of (2) are repeated to obtain a surface-treated phosphate glass curing agent (Sample No. 3).

4. After 1 gram of calcium hydroxide has been mixed with 100 grams of the powder obtained in (1), the mixture is charged into a beaker with the addition of about 1 liter of water. The procedures of (2) are then repeated to obtain a surface-treated phosphate glass curing agent (Sample No. 4).

5. After 5 grams of calcium hydroxide have been mixed with 100 grams of the powder obtained in (1), the mixture is charged into a beaker with the addition of about 1 liter of water. The procedures of (2) are then repeated to obtain a surface-treated phosphate glass curing agent (Sample No. 5).

6. After 31 parts by weight of aluminum phosphate ($AlPO_4$) and 13 parts by weight of calcium hydroxide ($Ca(OH)_2$) have been mixed with 100 parts by weight of ammonium primary phosphate ($NH_4H_2PO_4$), the mixture is placed into an alumina crucible, followed by closing of a lid of alumina. The crucible is then heated to 1250°C over about 1 hour, and is maintained at that temperature for 1 hour. Thereafter, the contents are poured into water for quenching. The product is dried and is then pulverized to no higher than about 88 microns to obtain a phosphate glass curing agent (Sample No. 6) comprising about 9.5

-11-

% by weight of CaO, about 13 % by weight of $Al_2O_3$ and about 77 % by weight of $P_2O_5$.

7.    After 19.5 parts by weight of aluminum phosphate and 41 parts by weight of calcium hydroxide have been mixed with 100 parts by weight of ammonium primary phosphate, the mixture is charged into an alumina crucible, followed by closing a lid of alumina.   The crucible is then heated to 1400°C over about 1.5 hours and is maintained at that temperature for 1 hour.   The procedures of (6) are then repeated to obtain a phosphate glass curing agent (Sample No. 7) comprising about 28 % by weight of CaO, about 7 % by weight of $Al_2O_3$ and about 64 % by weight of $P_2O_5$.

8.    A mixture of 100 grams of Sample No. 6 with 1 gram of calcium hydroxide is charged into a beaker with the addition of about 1 liter of water.   While heating and maintaining the beaker up to about 90°C, mixing and stirring are effected until the pH of the liquid decreases to no higher than about 8. Subsequently, filtration and drying yield a surface-treated phosphate glass curing agent (Sample No. 8).

9.    A mixture of 100 grams of Sample No. 6 with 2.5 grams of calcium hydroxide is subjected to the procedures of (6) to obtain a surface-treated phosphate glass curing agent (Sample No. 9).

10. A mixture of 100 grams of Sample No. 6 with 5 grams of calcium hydroxide is subjected to the procedures of (6) to obtain a surface-treated phosphate glass curing agent (Sample No. 10).

B) Pot Life

Testing is carried out to examine the pot life of the mixture of water glass with each of the curing agents mentioned above.

A mixture of 40 parts by weight of each curing agent with 100 parts by weight of commercially available No. 3 water glass (8.7 % by weight $Na_2O$, 27.3 % by weight $SiO_2$) is further mixed for about 1 minute. Thereafter, 30 grams of the resulting mixture are charged into a polystyrene container of 37mm dia. x 50 mmL, which is then closed and sometimes turned upside down. The pot life is then defined in terms of a period or time during which the mixture loses its flowability. This testing is carried out indoors at about 21ºC. The results are set forth in Table 1.

Table 1

| Curing Agent | Mixing Proportion of Curing Agents per 100 parts by weight of No. 3 Water Glass (parts by weight) | Pot Life |
|---|---|---|
| Sample No. 1 | 40 | 15 min |
| Sample No. 2 | 40 | 50 min |
| Sample No. 3 | 40 | 1 hr 40 min |
| Sample No. 4 | 40 | 5 hr 30 min |
| Sample No. 5 | 40 | 36 hr |
| Sample No. 6 | 40 | within 5 min |
| Sample No. 7 | 40 | within 5 min |
| Sample No. 8 | 40 | 25 min |
| Sample No. 9 | 40 | 1 hr 15 min |
| Sample No. 10 | 40 | 3 hr 30 min |
| Soda Silicofluoride (for control) | 26.4 | 30 min |
| | 13.2 | 40 min |
| | 6.6 | 50 min |

Note:

Soda silicofluoride is used for control. Assuming that soda silicofluoride and $Na_2O$ in water glass are cured according to the following reaction formula: $2Na_2O + Na_2SiF_6 \longrightarrow 6NaF + SiO_2$, the mixing ratio with water glass is fixed at 200 %, 100 % and 50 % of theoretical. Soda silicofluoride is adjusted to a particle size of no greater than 88 microns.

As will easily be understood from the results as set forth above, the curing agents according to the present invention are characterized in that it is significantly easy to control the pot life thereof, compared with the conventional curing agents which have encountered considerable difficulty in the regulation of the pot life.

It is to be noted that the pot life testing is carried out using only mixtures of the curing agents with water glass so as to examine a difference in the performance of the curing agents per se as completely as possible. However, it should be understood that the present invention is not only applicable to curing agents for water glass, but also that the curing agents of the present invention may be mixed with fillers, etc. to prepare adhesives, cured masses, etc. without incurring any problem.

C) Adhesive Property and Water Resistance

To confirm further the performance of the curing agents of the present invention, such curing agents, No. 3 water glass and fillers are used to prepare inorganic bonding agents with a view to testing the adhesive property and water resistance thereof. The curing agents for testing are Sample Nos. 5 and 10 given in Table 1 and soda silicofluoride for the control. The compositions of the bonding agents under test are shown in Table 2, and powdery silica and wollastonite used as fillers are adjusted to a particle size of no more than 88 microns and 44 microns, respectively.

**Table 2**

| Sample | Curing Agent | Silica Powder | Wollastonite Powder | No. 3 Water Glass |
|--------|--------------|---------------|---------------------|-------------------|
| A | Sample No. 5 33 parts | 10 parts | 57 parts | 80 parts |
| B | Sample No. 10 33 parts | 10 parts | 57 parts | 80 parts |
| C (for control) | 13.2 parts | 29.8 parts | 57 parts | 80 parts |

Note:

The curing agents of the present invention and soda silicofluoride are different from each other with respect to the proper amount to be used. Thus, in the case of soda silicofluoride, powdery silica having a similar particle size is supplemented to obtain the same amount of powder for testing.

For bonding testing, alumina square cylinders of 10 mm x 10 mm x 20 mm are used as the test pieces. The bonding agents are applied to the 10 mm x 10 mm faces to a thickness of about 0.5 mm, and such faces are bonded together. The bonding strength is then measured according to the three-point bonding test method. Referring to the bonding conditions, the test pieces applied with the bonding agents are allowed to stand for 1 day in a wet atmosphere, or alternatively are cured at 80°C by one-hour treatment to measure the bonding strength. In addition, the test pieces are immersed in water of 20°C and 45°C for a given period of time to measure the bonding strength for water resistance testing. The results of testing are set forth in Table 3.

## Table 3

| Sample | Bonding Condition | Bonding Strength Before Testing (kgf/cm$^2$) | Bonding Strength of Products immersed in water (kgf/cm$^2$) | | | |
| --- | --- | --- | --- | --- | --- | --- |
| | | | Water of 45°C | | | Water of 20°C |
| | | | 24 hr | 48 hr | 75 hr | 7 days |
| B | Placed in wet atmosphere of 20°C for 1 day | 100 | 40 | 40 | 40 | 40 |
| C (for control) | | 70 | 70 | 40 | 40 | 40 |
| A | Heat-treated at 80°C for 1 hr | 140 | 140 | 170 | 180 | 180 |
| B | | 120 | 80 | 80 | 80 | 80 |
| C (for control) | | 100 | 60 | 60 | 50 | 50 |

From the results of Table 3, it is evident that the use of the curing agents of the present invention gives bonding agents having strengths comparable to that of the bonding agent obtained using soda silicofluoride, and having more improved water resistance. In this test, Samples Nos. 5 and 10 of Table 1 are used as the curing agent. However, it is understood that the use of other curing agents gives bonding agents having physical properties which are not appreciably different from those of the foregoing bonding agents, when they are completely cured.

Referring to the pot life of the bonding agents prepared using fillers in addition to water glass and the curing agents as in this example, it is close to the pot life shown in Table 1, provided that it is defined as being a period of time during which the bonding agents show flowability sufficient for workability.

CLAIMS

1. A curing agent for water glass or silica sol comprising phosphate glass powder that has been treated by reaction with a solution of a substance capable of reacting with a phosphoric acid ion to form an insoluble or scarcely soluble salt.

2. A curing agent according to claim 1, wherein the said substance is calcium hydroxide, magnesium hydroxide or barium hydroxide.

3. A curing agent according to claim 1 or claim 2, wherein the phosphate glass powder is a two-component system comprising $Al_2O_3-P_2O_5$.

4. A curing agent according to claim 1 or claim 2, wherein the phosphate glass powder is a three-component system comprising $CaO-Al_2O_3-P_2O_5$ or $ZnO-Al_2O_3-P_2O_5$.

5. A curing agent according to any preceding claim, wherein the phosphate glass powder has a particle size no greater than about 88 microns.

6. A curing agent according to any preceding claim, wherein the phosphate glass powder contains no less than about 50% by weight of $P_2O_5$.

7. A composition comprising (a) water glass or silica sol and (b) an effective curing amount of a phosphate glass powder.

8. A composition according to claim 7, wherein component (a) is water glass and comprises sodium silicate, potassium silicate or lithium silicate.

9. A composition according to claim 7 or claim 8, wherein the phosphate glass powder is a two-component system comprising $Al_2O_3-P_2O_5$.

10. A composition according to claim 7 or claim 8, wherein the phosphate glass powder is a three- component system comprising $CaO-Al_2O_3-P_2O_5$ or $ZnO-Al_2O_3-P_2O_5$.

11. A composition according to any one of claims 7 to 10, wherein the phosphate glass powder has a particle size no greater than about 88 microns.

12. A composition according to any one of claims 7 to 11, wherein the phosphate glass powder contains no less than about 50% by weight of $P_2O_5$.

13. A composition according to any one of claims 7 to 12, wherein the amount of phosphate glass powder is about 10 to 200 parts by weight per 100 parts by weight of water glass.

14. A composition according to any one of claims 7 to 13, wherein the phosphate glass powder is a curing agent according to claim 1 or claim 2.

15. A cured mass of the composition of any one of claims 7 to 14.

16. The use of a phosphate glass powder as a curing agent for silicate binders of the water glass or silica sol kind.

## EUROPEAN SEARCH REPORT

**0194371**

Application number

EP 85 30 2127

### DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | CHEMICAL ABSTRACTS, vol. 96, no. 10, March 1982, page 314, no. 73730e, Columbus, Ohio, US; & JP - A - 81 145 151 (TAIHEI CHEMICAL INDUSTRIAL CO., LTD.) 11-11-1981 | 7-9,12 ,13,15 ,16 | C 04 B 28/34<br>C 04 B 22/16 |
| Y | Idem | 1,3 | |
| Y | FR-A-2 478 073 (MIZUSAWA KAGAKU K.K.)<br>* Claim 1; page 10, lines 4-13; page 11, lines 11-17 * | 1,3 | |
| A | US-A-4 288 252 (J.E. NEELY)<br>* Column 2, lines 22-28; claim 1 * | 1,3 | |
| A | DE-B-2 230 175 (KNAPSACK AG)<br><br>* Claims 1,3 * | | **TECHNICAL FIELDS SEARCHED (Int. Cl 4)**<br><br>C 04 B 28/00<br>C 04 B 22/00 |

The present search report has been drawn up for all claims

| Place of search | Date of completion of the search | Examiner |
|---|---|---|
| THE HAGUE | 12-05-1986 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82